# FASCICULE DE BREVET EUROPEEN

(11) **EP 4 669 885 B1**
(45) Date de publication et mention de la délivrance du brevet: **28.10.2026**
(21) Numéro de dépôt: 24710808.7
(22) Date de dépôt: 13.02.2024
(51) Int. Cl.: F16H 1/20, F16H 57/00, F16H 57/021, F16H 57/02, B60K 17/04, B60K 7/00, B60K 1/02, F16H 57/04

(54) **ENSEMBLE RÉDUCTEUR POUR VÉHICULE AUTOMOBILE**
UNTERSETZUNGSGETRIEBEANORDNUNG FÜR EIN KRAFTFAHRZEUG
REDUCTION GEAR ASSEMBLY FOR A MOTOR VEHICLE

(30) Priorité: 22.02.2023 FR 2301622
(43) Date de publication de la demande: 31.12.2025
(73) Titulaire: Nidec PSA Emotors, 78955 Carrieres sous Poissy (FR)
(72) Inventeur: REY, Jean Noel, 78160 MARLY-LE-ROI (FR); DELAPORTE, Jerome, 91690 Saint-Cyr-la-Rivière (FR); EZOUMIAN, Jean Marie, 94000 CRETEIL (FR); DELL AGNESE, Anthony, 78180 Montigny-le bretonneux (FR); PREVOST, Simon, 56860 SENE (FR)
(74) Mandataire: VATD
(86) Numéro de dépôt international: PCT/FR2024/000020
(87) Numéro de publication internationale: WO 2024/175838

(56) Documents cités:
- EP-A1- 2 213 495
- CN-A- 110 091 700
- DE-A1- 102020 118 194
- US-A1- 2011 139 522

## Description

### Domaine technique

La présente invention concerne le domaine des ensembles réducteurs pour machines électriques tournantes.

Les machines peuvent être synchrones ou asynchrones, à courant alternatif. Elles peuvent être des machines de traction ou de propulsion de véhicules automobiles électriques (Battery Electric Vehicle) et/ou hybrides (Hybrid Electric Vehicle - Plug-in Hybrid Electric Vehicle), telles que voitures individuelles, camionnettes, camions ou bus. L'invention s'applique également à des machines électriques tournantes pour des applications industrielles et/ou de production d'énergie, notamment navales, aéronautiques ou éoliennes.

### Technique antérieure

Dans la demande EP 3 287 666, les arbres de gauche sont indépendants des arbres de droite, et chaque arbre est porté par deux roulements. Un carter central est nécessaire pour maintenir les roulements centraux.

On connait également par les demandes US 2021/379977, DE 10 2020 113192, DE 10 2016 103481, DE 10 2009 013871, DE 10 2020 117451, CN 110091700, WO 2018/034099, US 2011/139522, EP 3 587 157, EP 3 431 813, EP 2 623 356, US 2014/349812 des ensembles réducteurs avec diverses configurations.

Dans les demandes EP 2 221 495 et US 2010/187026, les arbres de transmission sont chacun montés sur leurs propres roulements.

Il existe un besoin pour disposer d'un ensemble réducteur pour véhicule automobile offrant un rendement amélioré et un encombrement minimisé, tout en obtenant une réduction ou une démultiplication suffisante.

### Résumé de l'invention

L'invention vise à répondre à tout ou partie de ce besoin et elle y parvient, selon l'un de ses aspects, grâce à un ensemble réducteur pour véhicule automobile, comportant :
- un premier arbre d'entrée et un deuxième arbre d'entrée, notamment coaxiaux entre eux,
- un premier arbre de sortie et un deuxième arbre de sortie, notamment coaxiaux entre eux,
- au moins un étage de transmission reliant respectivement le premier arbre de sortie et le deuxième arbre de sortie au premier arbre d'entrée et au deuxième arbre d'entrée,
- un carter (50) dans lequel sont logés les premiers et deuxièmes arbres d'entrée et de sortie ainsi que l'au moins un étage de transmission (30), l'au moins un étage de transmission comportant au moins un premier arbre intermédiaire et un deuxième arbre intermédiaire de manière à ce qu'une transmission de mouvement ait lieu respectivement du premier arbre d'entrée vers le premier arbre de sortie et du deuxième arbre d'entrée vers le deuxième arbre de sortie, indépendamment l'une de l'autre,
   le premier arbre intermédiaire traversant le deuxième arbre intermédiaire (32) et le premier arbre intermédiaire (31) étant monté sur des premier et deuxième roulements disposés sur le carter,
   le deuxième arbre intermédiaire étant monté librement en rotation sur le premier arbre intermédiaire.

L'ensemble selon l'invention permet d'améliorer le rendement de la transmission de mouvement, en particulier lorsque le véhicule avance en ligne droite, en phase d'accélération, à vitesse constante ou en phase de décélération.

En outre, on obtient un double réducteur moins encombrant en largeur.

Il permet également de générer de l'électricité, en faisant fonctionner le moteur en génératrice, en cas de freinage en ligne droite du véhicule.

Grâce à l'invention, on forme une liaison pivot entre les premier et deuxième arbres intermédiaires afin de guider les arbres sans avoir besoin d'un carter central, ce qui permet ainsi de réduire l'encombrement de l'ensemble réducteur. Ceci évite l'utilisation de deux réducteurs séparés avec des arbres gauche et droit indépendants séparés par un carter central, lequel est nécessaire pour supporter les roulements centraux. L'assemblage en est simplifié.

On peut réduire également le nombre de roulements nécessaires.

Les premier et deuxième roulements ne sont pas montés sur le deuxième arbre de transmission.

Ainsi, la masse de l'ensemble est minimisée. En outre, le coût de fabrication est diminué.

Les premier arbre d'entrée et deuxième arbre d'entrée peuvent être solidaires en rotation chacun d'une machine électrique tournante.

Les premier arbre de sortie et deuxième arbre de sortie peuvent être solidaires en rotation chacun d'une roue motrice d'un véhicule, en particulier une roue droite et une roue gauche.

Les deux roues motrices peuvent être entrainées chacune indépendamment de l'autre par l'une des machines électriques tournantes.

Par ailleurs, l'ensemble réducteur permet d'avoir une différence de vitesse entre les deux lignes de transmission, une première ligne de transmission comportant le premier arbre d'entrée, le premier arbre de transmission et le premier arbre de sortie, et une deuxième ligne de transmission compotant le deuxième arbre d'entrée, le deuxième arbre de transmission et le deuxième arbre de sortie. Il est ainsi possible d'appliquer une différence de couple entre la roue droite et la roue gauche.

### Exposé de l'invention

Le premier arbre intermédiaire peut être monté sur les premier et deuxième roulements disposés de part et d'autre du deuxième arbre intermédiaire, étant notamment disposés à chacune de ses extrémités libres.

Le deuxième arbre intermédiaire est dans l'invention monté sur le premier arbre intermédiaire. Il ne repose pas sur un roulement monté en pivot sur un carter de l'ensemble.

Il peut être monté sur le premier arbre intermédiaire par un contact lisse. Le contact lisse peut comporter des gorges pour améliorer la lubrification.

Selon un mode particulier de réalisation de l'invention, le deuxième arbre intermédiaire peut être monté sur le premier arbre intermédiaire par des roulements en pivot, notamment deux roulements, par exemple des roulements à aiguilles. Les roulements à aiguille permettent de reprendre les efforts radiaux.

Les efforts axiaux peuvent être repris sans roulements. Selon un mode particulier de réalisation de l'invention, le deuxième arbre intermédiaire peut être monté en butée axiale contre un ou deux épaulements du premier arbre intermédiaire.

Le premier arbre intermédiaire peut comporter un épaulement entre ses deux extrémités libres, notamment dans une partie centrale de celui-ci. Le deuxième arbre intermédiaire peut être monté en butée axiale contre cet épaulement du premier arbre intermédiaire, lequel peut être unique.

Le contact entre le deuxième arbre intermédiaire et le premier arbre intermédiaire peut être direct ou se faire par l'intermédiaire d'un roulement, ou encore par un élément rapporté tel qu'une bague, billes, butée à aiguilles, douille, ou rondelle d'appui, réalisé dans un matériau adapté pour résister à la friction sous charge.

Le premier arbre intermédiaire peut comporter un deuxième épaulement entre ses deux extrémités libres, notamment à proximité du deuxième roulement. Le deuxième arbre intermédiaire peut être monté en butée axiale contre ce deuxième épaulement du premier arbre intermédiaire.

Selon un mode particulier de réalisation de l'invention, le deuxième arbre intermédiaire peut être monté en butée axiale contre un épaulement du deuxième roulement, notamment une bague intérieure du deuxième roulement.

Le contact entre le deuxième arbre intermédiaire et le deuxième roulement peut être direct ou se faire par l'intermédiaire d'une pièce épaulée rapportée. On peut également rajouter un roulement, par exemple une butée à billes ou à aiguilles ou un roulement conique, ou encore un élément de friction, par exemple un palier lisse ou une rondelle de friction. La rondelle de friction peut être réalisée dans un matériau adapté pour résister à la friction sous charge.

La ou les butées axiales permettent avantageusement de reprendre les efforts axiaux, avec une possibilité de glissement. Il n'y a pas de serrage au niveau de ces butées axiales.

Selon un mode particulier de réalisation de l'invention, l'ensemble réducteur peut comporter une pièce de maintien du deuxième roulement sur le premier arbre intermédiaire. La pièce de maintien peut être rapportée sur le premier arbre intermédiaire. Elle peut par exemple être vissée sur celui-ci, ou en variante être fixée au moyen d'un anneau d'arrêt axial sur le premier arbre intermédiaire.

Elle permet de maintenir le deuxième roulement, afin de l'empêcher de se désemmancher, et d'éviter que celui-ci ne glisse à cause des efforts axiaux exercés par le deuxième arbre intermédiaire.

L'ensemble réducteur peut comporter un carter dans lequel sont logés les premiers et deuxièmes arbres d'entrée et de sortie ainsi que le ou les étages de transmission.

Selon un mode particulier de réalisation de l'invention, le carter peut comporter deux parties, une première partie de carter logeant notamment le premier arbre d'entrée, le premier arbre de sortie, ainsi qu'une première partie de l'au moins un étage de transmission, et une deuxième partie de carter logeant notamment le deuxième arbre d'entrée, le deuxième arbre de sortie, ainsi qu'une deuxième partie de l'au moins un étage de transmission.

Les première et deuxième parties peuvent être sensiblement symétriques l'une par rapport à l'autre.

Le carter peut être dépourvu d'une troisième partie, il peut notamment être dépourvu d'une partie centrale. Il peut notamment être dépourvu d'une partie destinée à maintenir un ou des roulements centraux, qui serviraient à maintenir le deuxième arbre intermédiaire.

Le carter est configuré pour maintenir le premier arbre intermédiaire à chacune de ses extrémités libres. Le premier arbre intermédiaire traverse tout le carter et est monté sur le carter par les premier et deuxième roulements disposés à chacune de ses extrémités libres. Les premier et deuxième roulements sont montés sur le carter. Le premier roulement est monté sur la première partie de carter et le deuxième roulement est monté sur la deuxième partie de carter.

Selon un mode particulier de réalisation de l'invention, le premier arbre intermédiaire peut comporter un canal longitudinal ou plusieurs canaux longitudinaux, notamment traversant(s). Le canal longitudinal peut être traversant et s'étendre sur toute la longueur du premier arbre intermédiaire. En variante, le canal longitudinal peut s'étendre sur une partie seulement de la longueur du premier arbre intermédiaire. Il permet le passage d'un liquide lubrifiant tel qu'une huile, afin de lubrifier les premier et deuxième roulement.

Le premier arbre intermédiaire peut comporter un ou plusieurs canaux radiaux pour permettre le passage du liquide lubrifiant vers le deuxième arbre intermédiaire, par exemple vers un ou des roulements, notamment roulements à aiguille, disposés entre le premier arbre intermédiaire et le deuxième arbre intermédiaire.

L'ensemble peut comporter une pipette d'entrée de liquide lubrifiant dans le canal longitudinal. Le liquide lubrifiant peut être amené par un système de lubrification active, comportant par exemple une pompe, laquelle peut être disposée à l'extérieur de l'ensemble réducteur.

Le premier arbre intermédiaire et le deuxième arbre intermédiaire de l'au moins un étage de transmission peuvent comporter chacun des dentures hélicoïdales coopérant respectivement avec le premier arbre de sortie et avec le deuxième arbre de sortie, ou avec un autre étage de transmission, notamment les arbres intermédiaires d'un autre étage de transmission, lesdites dentures hélicoïdales ayant respectivement des hélices en sens opposés l'une par rapport à l'autre.

Le premier arbre intermédiaire et le deuxième arbre intermédiaire peuvent comporter chacun des dentures hélicoïdales coopérant respectivement avec le premier arbre d'entrée et avec le deuxième arbre d'entrée, ou avec un autre étage de transmission, notamment les arbres intermédiaires d'un autre étage de transmission. Lesdites dentures hélicoïdales peuvent avoir respectivement des hélices en sens opposés l'une par rapport à l'autre.

Les dentures hélicoïdales des premier et deuxième arbres intermédiaires peuvent être sensiblement symétriques les unes par rapport aux autres, voire symétriques. Les sens de leurs hélices sont opposés.

On obtient ainsi que les efforts de poussée latérale soient opposés.

Le sens des angles d'hélice sur les engrenages peut être choisi pour mieux gérer les efforts axiaux sur les arbres en fonctionnement et donc améliorer le rendement dans certaines conditions.

Par engrènement, on désigne un ensemble composé d'un pignon et d'une roue, interagissant ensemble par l'intermédiaire de leurs dentures respectives de manière à transmettre un couple. Un pignon comporte un engrenage tel que mentionné ci-dessus, comportant des dentures.

Avec des sens d'hélice opposés entre les dentures des premier et deuxième arbres intermédiaires, lorsque l'on applique le couple machine dans le même sens à gauche et à droite, les premier et deuxième arbres intermédiaires vont être poussés l'un vers l'autre. Lorsque l'on inverse les deux couples machine, avec toujours le même sens entre gauche et droite, les premier et deuxième arbres intermédiaires vont se repousser.

Ainsi, grâce à l'invention, on obtient que, quelle que soit le sens du couple appliqué sur les dentures, en accélération ou en décélération, les efforts axiaux sur les premier et deuxième arbres intermédiaires se compensent en grande partie en faisant passer le flux d'effort axial principalement par l'une ou l'autre des butées axiales entre ces deux arbres, ce qui permet de réduire très fortement les efforts axiaux subis par les roulements supportant ces arbres et montés dans le carter, notamment lorsque les couples des deux machines électriques sont égaux. On peut ainsi augmenter leur durée de vie et/ou réduire les pertes quel que soit le sens du couple moteur ou le mode de fonctionnement, notamment en accélération ou en décélération. On peut également réduire la taille des roulements utilisés, à durée de vie égale.

Le gain en rendement est ainsi maximum lorsque le véhicule roule en ligne droite, lorsqu'il n'y a pas de différence de vitesse entre les premier et deuxième arbres intermédiaires.

Chacun des premier et deuxième arbre d'entrée peut être monté en rotation sur le carter par deux roulements. L'ensemble peut comporter au moins deux roulements à cet effet, notamment au moins un roulement pour le premier arbre d'entrée et au moins un roulement pour le deuxième arbre d'entrée. L'ensemble peut comporter quatre roulements à cet effet, notamment deux roulement pour le premier arbre d'entrée et deux roulements pour le deuxième arbre d'entrée.

Le montage d'au moins un roulement de support d'au moins l'un des arbres d'entrée, notamment le roulement le plus intérieur, peut se faire par l'intermédiaire d'une pièce de support. La présence de cette pièce de support permet de faciliter le moulage du carter.

Le roulement le plus extérieur peut être un roulement d'un moteur d'entrainement de l'arbre d'entrée correspondant. L'encombrement de l'ensemble en est minimisé. Il peut être moins large.

La pièce de support peut être fixée dans le carter, par exemple par vissage, au moyen de goupilles ou directement dans le carter. Elle peut être positionnée précisément au moyen de goupilles et/ou de surfaces aménagées dans le carter. L'ensemble peut comporter deux pièces de support ou une unique pièce de support pour les premier et deuxième arbres d'entrée. L'ensemble peut comporter une première pièce de support pour le montage d'un roulement de support du premier arbre d'entrée. L'ensemble peut comporter une deuxième pièce de support pour le montage d'un roulement de support du deuxième arbre d'entrée.

Une telle configuration permet de simplifier la lubrification de l'ensemble. Elle peut permettre de ne pas injecter le liquide lubrifiant radialement. Les roulements sont plus accessibles.

Les engrènements entre les arbres de sortie et les arbres intermédiaires peuvent être disposés plus à l'intérieur, notamment côte à côte, que les engrènements entre les arbres d'entrée et les arbres intermédiaires, disposés plus à l'extérieur.

En variante, les engrènements entre les arbres de sortie et les arbres intermédiaires peuvent être disposés plus à l'extérieur que les engrènements entre les arbres d'entrée et les arbres intermédiaires, qui peuvent alors être disposés côte à côte. Ainsi, les engrènements entre les arbres de sortie et les arbres intermédiaires sont plus proches des roulements que les engrènements entre les arbres d'entrée et les arbres intermédiaires.

Un tel agencement permet de mieux répartir les efforts sur les arbres intermédiaires. La durée de vie des roulements est ainsi prolongée. La flexion des arbres est diminuée, et le désalignement au niveau des roulements est amoindri.

En outre, la taille de l'arbre intermédiaire peut être ainsi réduite. Il en résulte une meilleure compacité de l'ensemble réducteur et un gain en termes d'encombrement.

L'ensemble peut comporter un système d'injection radiale de l'huile sous pression, comportant une douille autour d'un des arbres d'entrée. La douille peut être maintenue fixe dans le carter. A l'intérieur de la douille peut être aménagée une ouverture radiale pour l'arrivée d'huile, et sur laquelle sont montés deux segments permettant de limiter les fuites lors du passage de l'huile depuis l'ouverture de la douille vers les ouvertures radiales de l'arbre d'entrée.

Selon un mode particulier de réalisation de l'invention, le deuxième arbre d'entrée peut être monté librement en rotation sur le premier arbre d'entrée. Le deuxième arbre d'entrée est monté en chaussette sur le premier arbre d'entrée.

Le deuxième arbre d'entrée peut être monté sur le premier arbre d'entrée par des roulement en pivot, notamment deux roulements, par exemple des roulements à aiguilles. Les roulements à aiguille permettent de reprendre les efforts radiaux.

Les premier et deuxième arbres d'entrée peuvent être coaxiaux entre eux ou en variante non coaxiaux.

Selon un mode particulier de réalisation de l'invention, le premier arbre d'entrée peut comporter un canal longitudinal traversant. Le canal longitudinal peut s'étendre sur toute la longueur du premier arbre d'entrée. Il permet le passage d'un liquide lubrifiant tel qu'une huile.

Le premier arbre d'entrée peut comporter un ou plusieurs canaux radiaux pour permettre le passage du liquide lubrifiant vers le deuxième arbre d'entrée, par exemple vers un ou des roulements, notamment roulements à aiguille, disposés entre le premier arbre d'entrée et le deuxième arbre d'entrée.

L'ensemble peut comporter une pipette d'entrée de liquide lubrifiant dans le canal longitudinal.

Selon un mode particulier de réalisation de l'invention, deuxième arbre de sortie peut être monté librement en rotation sur le premier arbre de sortie. Le deuxième arbre de sortie est monté en chaussette sur le premier arbre de sortie.

Le deuxième arbre de sortie peut être monté sur le premier arbre de sortie par un ou des roulement en pivot, notamment un ou deux roulements, par exemple un ou des roulements à aiguilles. Les roulements à aiguille permettent de reprendre les efforts radiaux.

Les premier et deuxième arbres de sortie peuvent être coaxiaux entre eux ou en variante non coaxiaux.

En variante, le deuxième arbre de sortie peut ne pas être monté sur le premier arbre de sortie.

Selon un mode particulier de réalisation de l'invention, le deuxième arbre de sortie et/ou le premier arbre de sortie peuvent être montés chacun sur un roulement combiné à double rangée de billes. Le roulement peut être à contact oblique.

Ce type de roulement permet une bonne capacité de charge, la gestion des efforts axiaux et un guidage de l'axe de rotation, ce qui permet de se passer de liaison entre le deuxième arbre de sortie et le premier arbre de sortie. Un roulement à deux rangées de billes à contact oblique peut être plus facile à précharger pour améliorer la durabilité et augmenter la rigidité de l'ensemble.

Le roulement combiné peut être disposé sur le carter.

L'ensemble peut comporter un premier roulement combiné pour supporter le premier arbre de sortie sur la première partie de carter. L'ensemble peut comporter un deuxième roulement combiné pour supporter le deuxième arbre de sortie sur la deuxième partie de carter.

Une telle configuration avec un seul roulement combiné pour supporter un arbre de sortie permet de resserrer les deux arbres de sorties l'un vers l'autre et ainsi de diminuer l'écartement entre les roues du véhicule.

Selon un mode particulier de réalisation de l'invention, l'ensemble peut comporter au moins un élément de maintien, notamment une plaquette de maintien, du roulement combiné sur le carter. L'élément de maintien peut par exemple comporter une plaque, un anneau d'arrêt axial, ou encore une plaque intégrée à la bague extérieure du roulement.

La plaquette de maintien peut avoir la forme d'une rondelle avec des oreilles permettant le passage de vis. Elle peut être vissée dans le carter, avec des vis ou rondelles par exemple, ou en variante elle peut être intégrée au roulement combiné, notamment dans la bague extérieure du roulement combiné. La plaquette de maintien peut être disposée perpendiculairement à un axe de rotation de l'ensemble. La lubrification peut en être facilitée.

L'ensemble peut comporter une première plaquette de maintien du premier roulement combiné sur la première partie de carter. L'ensemble peut comporter une deuxième plaquette de maintien du deuxième roulement combiné sur la deuxième partie de carter.

L'un des ou les premier et deuxième arbres de sortie peuvent être pleins. En variante, ils peuvent être creux.

L'ensemble réducteur selon l'invention peut comporter un unique étage de transmission, comme décrit ci-dessus. En variante, il peut comporter plusieurs étages de transmission, par exemple deux ou trois. Au moins un étage de transmission, voire tous les étages de transmission, peuvent être tels que décrit ci-dessus.

L'invention a encore pour objet un dispositif de propulsion pour véhicule automobile, comportant un ensemble réducteur tel que décrit plus haut et deux machines électriques tournantes.

Les machines électriques tournantes peuvent être disposées de part et d'autre de l'ensemble réducteur. Chaque machine électrique tournante peut comporter un arbre relié à un arbre d'entrée de l'ensemble réducteur. Le dispositif peut comporter une première machine électrique tournante solidaire en rotation du premier arbre d'entrée de l'ensemble réducteur. Le dispositif peut comporter une deuxième machine électrique tournante solidaire en rotation du deuxième arbre d'entrée de l'ensemble réducteur.

L'invention a encore pour objet un véhicule comportant un ensemble ou un dispositif tel que décrit plus haut. Le véhicule peut comporter au moins deux roues motrices, chacune des roues motrices étant entrainée en rotation par l'ensemble réducteur, notamment par un arbre de sortie de celui-ci.

Les roues motrices peuvent être disposées de part et d'autre de l'ensemble réducteur. Chaque roue motrice peut comporter un arbre relié à un arbre de sortie de l'ensemble réducteur. Le dispositif peut comporter une première roue motrice solidaire en rotation du premier arbre de sortie de l'ensemble réducteur. Le dispositif peut comporter une deuxième roue motrice solidaire en rotation du deuxième arbre de sortie de l'ensemble réducteur.

### Brève description des dessins

L'invention sera mieux comprise à la lecture de la description détaillée qui va suivre, d'exemples de réalisation non limitatifs de celle-ci, et à l'examen du dessin annexé.
[Fig 1a] La figure 1a est une vue en perspective d'un ensemble réducteur selon l'invention.
[Fig 1b] La figure 1b est une autre vue en perspective de l'ensemble réducteur de la figure 1a.
[Fig 1c] La figure 1c est une autre vue en perspective de l'ensemble réducteur de la figure 1a.
[Fig 2a] La figure 2a est une vue de face de l'ensemble réducteur de la figure 1a.
[Fig 2b] La figure 2b est une autre vue de face de l'ensemble réducteur de la figure 1a.
[Fig 3] La figure 3 illustre, de manière schématique et partielle, une variante de réalisation pour les arbres d'entrée.
[Fig 4] La figure 4 illustre, de manière schématique et partielle, une autre variante de réalisation pour les arbres d'entrée.
[Fig 5] La figure 5 illustre, de manière schématique et partielle, une variante de réalisation pour les arbres de sortie.
[Fig 6] La figure 6 illustre, de manière schématique et partielle, une variante de réalisation pour les engrènements.

### Description détaillée

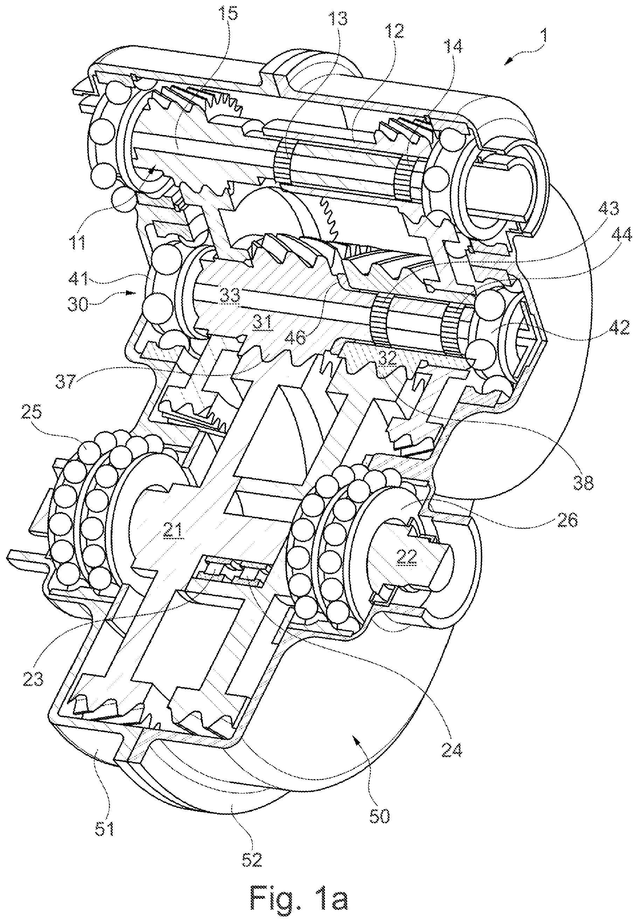

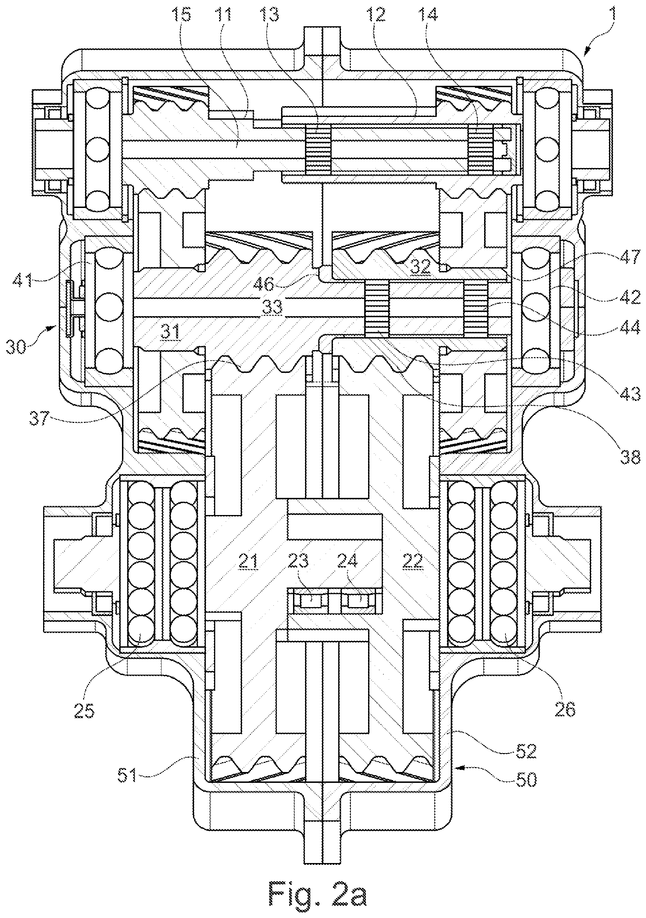

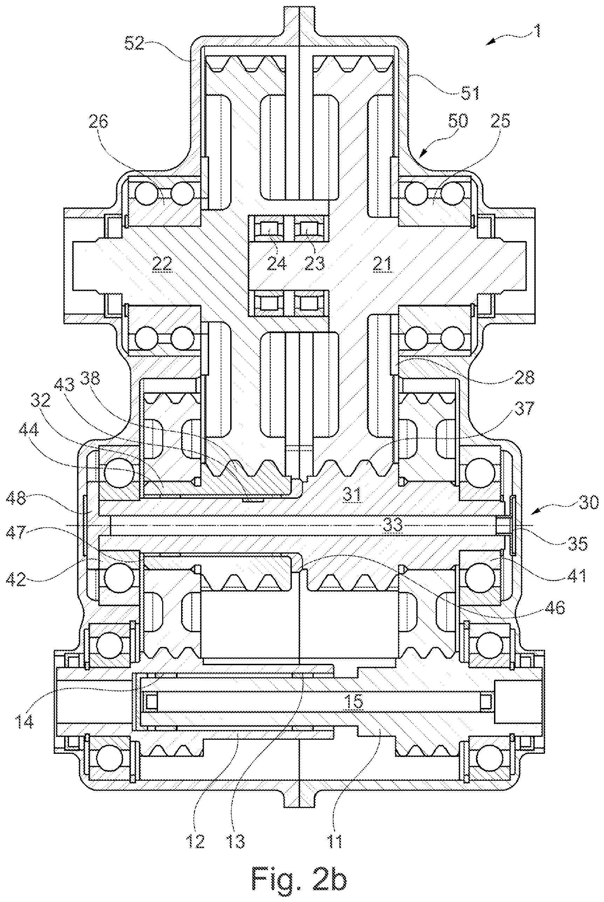

On a illustré aux figures 1a à 2b un ensemble réducteur 1 pour véhicule automobile, comportant :
- un premier arbre d'entrée 11 et un deuxième arbre d'entrée 12 coaxiaux entre eux,
- un premier arbre de sortie 21 et un deuxième arbre de sortie 22 coaxiaux entre eux, et
- au moins un étage de transmission 30 reliant respectivement le premier arbre de sortie 21 et le deuxième arbre de sortie 22 au premier arbre d'entrée 11 et au deuxième arbre d'entrée 12.

L'étage de transmission 30 comporte au moins un premier arbre intermédiaire 31 et un deuxième arbre intermédiaire 32 de manière à ce qu'une transmission de mouvement ait lieu respectivement du premier arbre d'entrée 11 vers le premier arbre de sortie 21 et du deuxième arbre d'entrée 12 vers le deuxième arbre de sortie 22, indépendamment l'une de l'autre.

Selon l'invention, le premier arbre intermédiaire 31 traverse tout l'ensemble et est monté sur des premier et deuxième roulements 41, 42 disposés de part et d'autre du deuxième arbre intermédiaire 32, étant disposés à chacune de ses extrémités libres.

Le deuxième arbre intermédiaire 32 est monté librement en rotation sur le premier arbre intermédiaire 31. On forme une liaison pivot entre les premier et deuxième arbres intermédiaires 31, 32 afin de guider les arbres sans avoir besoin d'un carter central, ce qui permet ainsi de réduire l'encombrement de l'ensemble réducteur.

Les premier arbre d'entrée et deuxième arbre d'entrée peuvent être solidaires en rotation chacun d'une machine électrique tournante. Les deux machines électriques tournantes peuvent être disposées de part et d'autre de l'ensemble réducteur. Chaque machine électrique tournante peut comporter un arbre relié à un arbre d'entrée de l'ensemble réducteur.

Les premier arbre de sortie et deuxième arbre de sortie peuvent être solidaires en rotation chacun d'une roue motrice d'un véhicule, en particulier une roue droite et une roue gauche. Les roues motrices peuvent être disposées de part et d'autre de l'ensemble réducteur. Chaque roue motrice peut comporter un arbre relié à un arbre de sortie de l'ensemble réducteur. Les deux roues motrices peuvent ainsi être entrainées chacune indépendamment de l'autre par l'une des machines électriques tournantes.

Le deuxième arbre intermédiaire 32 est monté sur le premier arbre intermédiaire 31 par des roulements en pivot 43, 44, à savoir des roulements à aiguilles, qui permettent de reprendre les efforts radiaux.

En outre, le deuxième arbre intermédiaire 32 est monté en butée axiale contre le premier arbre intermédiaire 31. Le premier arbre intermédiaire 31 comporte à cet effet un épaulement 46 entre ses deux extrémités libres, dans une partie centrale de celui-ci.

Par ailleurs, le deuxième arbre intermédiaire est monté en butée axiale contre un épaulement 47 du deuxième roulement 42, en particulier une bague intérieure du deuxième roulement 42. Les butées axiales permettent avantageusement de reprendre les efforts axiaux, avec une possibilité de glissement. Il n'y a pas de serrage au niveau de ces butées axiales.

Enfin, l'ensemble réducteur 1 comporte une pièce de maintien 48 du deuxième roulement 42 sur le premier arbre intermédiaire 31, laquelle est rapportée sur le premier arbre intermédiaire 31 par vissage. Cette pièce de maintien 48 permet de maintenir le deuxième roulement 42, afin de l'empêcher de se désemmancher, et d'éviter que celui-ci ne glisse à cause des efforts axiaux exercés par le deuxième arbre intermédiaire 32.

Par ailleurs, l'ensemble réducteur comporte un carter 50 dans lequel sont logés les premiers et deuxièmes arbres d'entrée et de sortie ainsi que l'étage de transmission 30.

Le carter comporte deux parties 51, 52, une première partie 51 de carter logeant le premier arbre d'entrée 11, le premier arbre de sortie 21, ainsi qu'une première partie de l'étage de transmission 30, et une deuxième partie 52 de carter logeant le deuxième arbre d'entrée 12, le deuxième arbre de sortie 22, ainsi qu'une deuxième partie de l'étage de transmission 30. Les première et deuxième parties 51, 52 sont sensiblement symétriques l'une par rapport à l'autre.

Le carter 50 est configuré pour maintenir le premier arbre intermédiaire 31 à chacune de ses extrémités libres. Le premier roulement 41 est monté sur la première partie de carter 51 et le deuxième roulement 42 est monté sur la deuxième partie de carter 52.

Le premier arbre intermédiaire 31 comporte un canal longitudinal traversant 33. Le canal longitudinal 33 s'étend sur toute la longueur du premier arbre intermédiaire 31. Il permet le passage d'un liquide lubrifiant tel qu'une huile, afin de lubrifier les premier et deuxième roulements 43, 44. L'ensemble comporte en outre une pipette d'entrée 35 de liquide lubrifiant dans le canal longitudinal 33.

D'autre part, le premier arbre intermédiaire 31 et le deuxième arbre intermédiaire 32 comportent chacun des dentures hélicoïdales 37, 38 coopérant respectivement avec le premier arbre de sortie 21 et avec le deuxième arbre de sortie 22, lesdites dentures hélicoïdales 37, 38 étant en sens opposés l'une par rapport à l'autre. Les diamètres des arbres de transmission et de sortie sont choisis de manière à obtenir une réduction du mouvement.

Le deuxième arbre d'entrée 12 est dans cet exemple monté librement en rotation sur le premier arbre d'entrée 11. On dit que le deuxième arbre d'entrée 12 est monté en chaussette sur le premier arbre d'entrée 11.

En outre, le deuxième arbre d'entrée 12 est monté sur le premier arbre d'entrée 11 par deux roulements en pivot 13, 14, qui sont des roulements à aiguilles afin de reprendre les efforts radiaux.

Par ailleurs, le premier arbre d'entrée 11 comporte un canal longitudinal traversant 15, qui s'étend sur toute la longueur du premier arbre d'entrée 11. Il permet le passage d'un liquide lubrifiant tel qu'une huile.

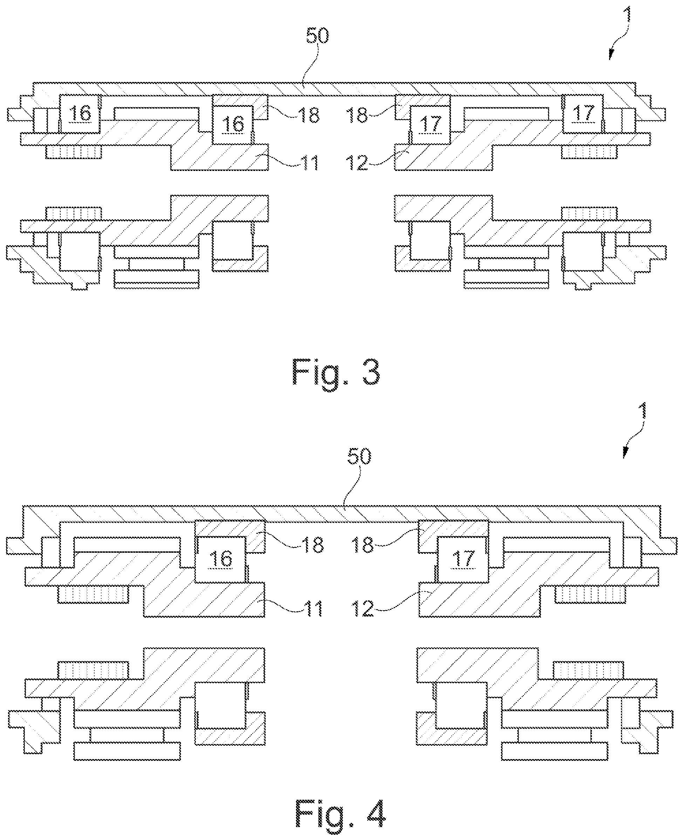

Dans une variante de réalisation illustrée à la figure 3, chacun des premier et deuxième arbres d'entrée 11, 12 est monté en rotation sur le carter par deux roulements respectivement 16 et 17. L'ensemble comporte ainsi quatre roulements à cet effet, deux roulements 16 pour le premier arbre d'entrée 11 et deux roulements 17 pour le deuxième arbre d'entrée 12.

Dans la variante de réalisation illustrée à la figure 4, on a un roulement 16 pour le premier arbre d'entrée 11 et un roulement 17 pour le deuxième arbre d'entrée 12.

Dans les deux cas, le montage d'au moins un roulement de support d'au moins l'un des arbres d'entrée, en particulier le roulement le plus intérieur, se fait par l'intermédiaire d'une pièce de support 18, laquelle est fixée dans le carter. L'ensemble comporte ainsi une première pièce de support 18 pour le montage d'un roulement de support du premier arbre d'entrée 11 et une deuxième pièce de support 18 pour le montage d'un roulement de support du deuxième arbre d'entrée 12.

Dans le mode de réalisation des figures 1a à 2b, le deuxième arbre de sortie 22 est monté librement en rotation sur le premier arbre de sortie 21. On dit que le deuxième arbre de sortie 22 est monté en chaussette sur le premier arbre de sortie 21.

Le deuxième arbre de sortie 22 peut être monté sur le premier arbre de sortie 21 par deux roulements en pivot 23, 24, par exemple deux roulements à aiguilles. Les roulements à aiguille permettent de reprendre les efforts radiaux.

Par ailleurs, le deuxième arbre de sortie 22 et le premier arbre de sortie 21 sont montés chacun sur un roulement combiné à double rangée de billes 25, 26. Les roulements combinés 25, 26 sont disposés sur le carter. L'ensemble comporte ainsi un premier roulement combiné 25 pour supporter le premier arbre de sortie 21 sur la première partie de carter 51. L'ensemble comporte un deuxième roulement combiné 26 pour supporter le deuxième arbre de sortie 22 sur la deuxième partie de carter 52.

Dans l'exemple décrit, les premier et deuxième arbres de sortie 21, 22 sont creux.

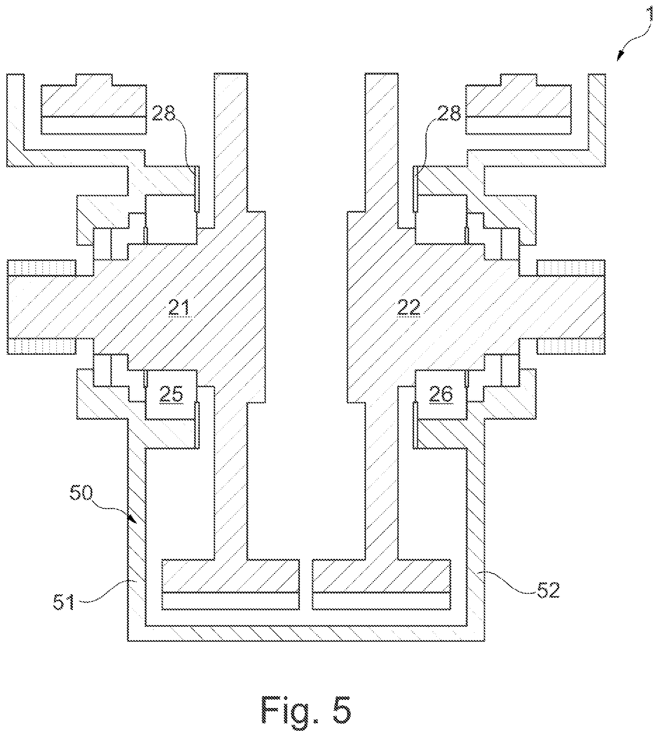

En variante, le deuxième arbre de sortie peut ne pas être monté sur le premier arbre de sortie, comme illustré à la figure 5. Les arbres de sortie sont pleins.

Dans cet exemple de la figure 5, l'ensemble réducteur 1 comporte en outre une plaquette de maintien 28 du roulement combiné 25, 26 sur le carter 50. La plaquette de maintien a la forme d'une rondelle avec des oreilles permettant le passage de vis, elle est vissée dans le carter. La plaquette de maintien 28 est disposée perpendiculairement à un axe de rotation de l'ensemble. L'ensemble comporte ainsi une première plaquette de maintien 28 du premier roulement combiné 25 sur la première partie de carter 51, ainsi qu'une deuxième plaquette de maintien 28 du deuxième roulement combiné 26 sur la deuxième partie de carter 52.

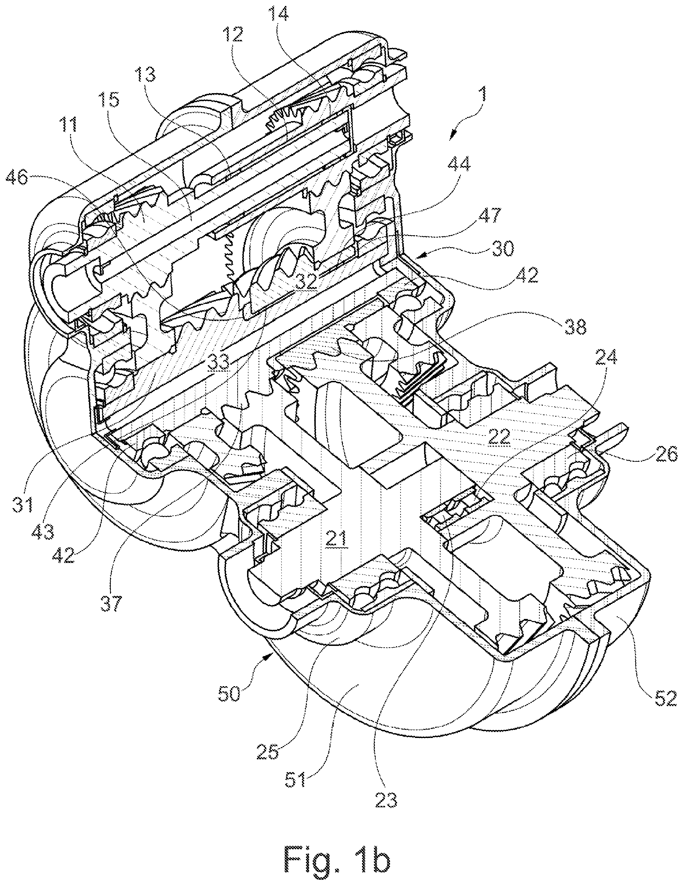

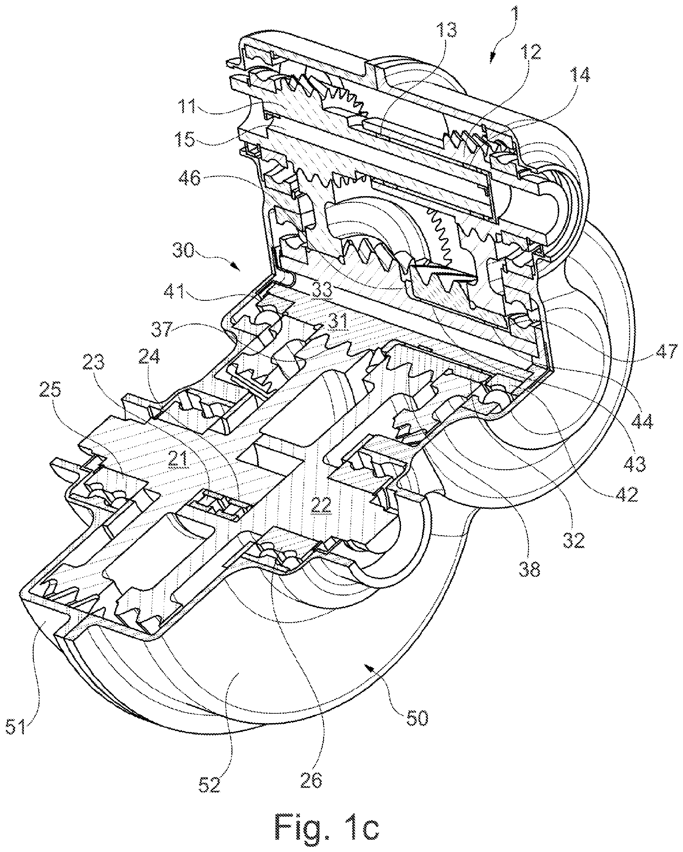

Dans le mode de réalisation des figures 1 à 2b, ainsi que dans les variantes de réalisation des figures 3 à 5, l'ensemble réducteur 1 comporte quatre engrènements, les engrènements entre les arbres de sortie 21, 22 et les arbres intermédiaires 31, 32 étant disposés côte à côte et plus au centre axialement que les engrènements entre les arbres d'entrée et les arbres intermédiaires, disposés plus à l'extérieur.

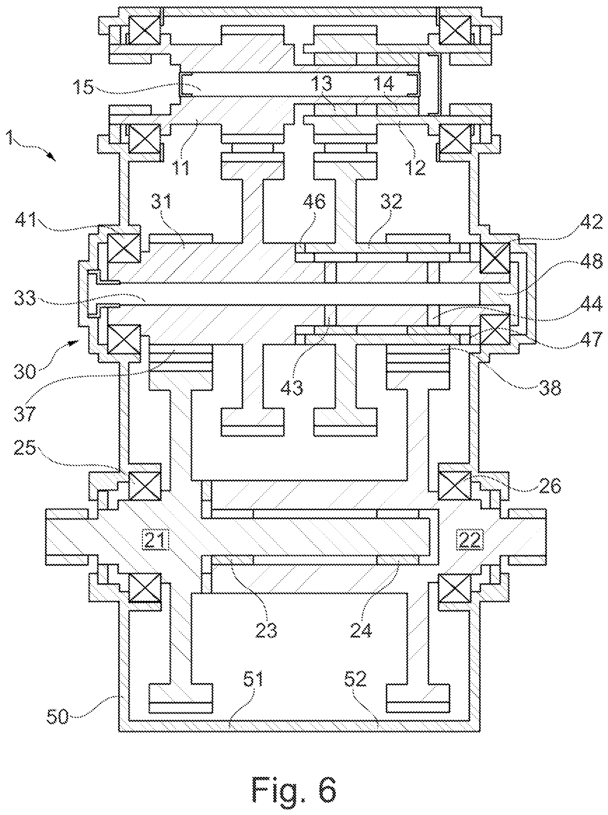

En variante, les engrènements entre les arbres de sortie 21, 22 et les arbres intermédiaires 31, 32 sont disposés plus à l'extérieur que les engrènements entre les arbres d'entrée 11, 12 et les arbres intermédiaires 31, 32, comme illustré à la figure 6. Les engrènements entre les arbres d'entrée 11, 12 et les arbres intermédiaires 31, 33 sont disposés côte à côte, plus au centre axialement que les engrènements entre les arbres de sortie 21, 22 et les arbres intermédiaires 31, 32. Les engrènements entre les arbres de sortie 21, 22 et les arbres intermédiaires 31, 32 sont plus proches des roulements.

## Revendications

1. Ensemble réducteur (1) pour véhicule automobile, comportant :
- un premier arbre d'entrée (11) et un deuxième arbre d'entrée (12), notamment coaxiaux entre eux,
- un premier arbre de sortie (21) et un deuxième arbre de sortie (22), notamment coaxiaux entre eux,
- au moins un étage de transmission (30) reliant respectivement le premier arbre de sortie (21) et le deuxième arbre de sortie (22) au premier arbre d'entrée (11) et au deuxième arbre d'entrée (12),
- un carter (50) dans lequel sont logés les premiers et deuxièmes arbres d'entrée et de sortie ainsi que l'au moins un étage de transmission (30), l'au moins un étage de transmission (30) comportant au moins un premier arbre intermédiaire (31) et un deuxième arbre intermédiaire (32) de manière à ce qu'une transmission de mouvement ait lieu respectivement du premier arbre d'entrée (11) vers le premier arbre de sortie (21) et du deuxième arbre d'entrée (12) vers le deuxième arbre de sortie (22), indépendamment l'une de l'autre,
**caractérisé en ce que** le premier arbre intermédiaire (31) traverse le deuxième arbre intermédiaire (32) et que le premier arbre intermédiaire (31) est monté sur des premier et deuxième roulements (41, 42) disposés sur le carter (50),
le deuxième arbre intermédiaire (32) étant monté librement en rotation sur le premier arbre intermédiaire (31).

2. Ensemble réducteur (1) selon la revendication précédente, le deuxième arbre intermédiaire (32) étant monté sur le premier arbre intermédiaire (31) par des roulements en pivot (43, 44), notamment deux roulements, par exemple des roulements à aiguilles.

3. Ensemble réducteur (1) selon l'une quelconque des revendications précédentes, le deuxième arbre intermédiaire (32) étant monté en butée axiale contre un ou deux épaulements (46) du premier arbre intermédiaire (31).

4. Ensemble réducteur (1) selon l'une quelconque des revendications précédentes, le deuxième arbre intermédiaire (32) étant monté en butée axiale contre un épaulement (47) du deuxième roulement (42), notamment une bague intérieure du deuxième roulement.

5. Ensemble réducteur (1) selon l'une quelconque des revendications précédentes, comportant une pièce de maintien (48) du deuxième roulement (42) sur le premier arbre intermédiaire (31).

6. Ensemble réducteur (1) selon l'une quelconque des revendications précédentes, le carter (50) comportant deux parties, une première partie (51) de carter logeant notamment le premier arbre d'entrée, le premier arbre de sortie, ainsi qu'une première partie de l'au moins un étage de transmission (30), et une deuxième partie (52) de carter logeant notamment le deuxième arbre d'entrée, le deuxième arbre de sortie, ainsi qu'une deuxième partie de l'au moins un étage de transmission (30).

7. Ensemble réducteur (1) selon l'une quelconque des revendications précédentes, le premier arbre intermédiaire (31) comportant un canal longitudinal traversant (33) ou plusieurs canaux longitudinaux traversants.

8. Ensemble réducteur (1) selon l'une quelconque des revendications précédentes, le premier arbre intermédiaire (31) et le deuxième arbre intermédiaire (32) de l'au moins un étage de transmission comportant chacun des dentures hélicoïdales (37, 38) coopérant respectivement avec le premier arbre de sortie (21) et avec le deuxième arbre de sortie (22) ou avec un autre étage de transmission, notamment les arbres intermédiaires d'un autre étage de transmission, lesdites dentures hélicoïdales (37, 38) ayant respectivement des hélices en sens opposés l'une par rapport à l'autre.

9. Ensemble réducteur (1) selon l'une quelconque des revendications précédentes, le deuxième arbre d'entrée (12) étant monté librement en rotation sur le premier arbre d'entrée (11).

10. Ensemble réducteur (1) selon l'une quelconque des revendications précédentes, le premier arbre d'entrée (11) comportant un canal longitudinal traversant (15).

11. Ensemble réducteur (1) selon l'une quelconque des revendications précédentes, le deuxième arbre de sortie (22) étant monté librement en rotation sur le premier arbre de sortie (21).

12. Ensemble réducteur (1) selon l'une quelconque des revendications précédentes, le deuxième arbre de sortie (22) et/ou le premier arbre de sortie (21) étant monté chacun sur un roulement combiné (25, 26) à double rangée de billes.

13. Ensemble réducteur (1) selon la revendication précédente, comportant au moins un élément de maintien, notamment une plaquette de maintien (28), du roulement combiné sur le carter.

14. Dispositif de propulsion pour véhicule automobile, comportant un ensemble réducteur (1) selon l'une quelconque des revendications précédentes et deux machines électriques tournantes.

15. Véhicule comportant un ensemble réducteur (1) selon l'une quelconque des revendications 1 à 13 ou un dispositif de propulsion selon la revendication précédente.

## Patentansprüche

1. Untersetzungsgetriebe (1) für Kraftfahrzeuge mit:
- eine erste Eingangswelle (11) und eine zweite Eingangswelle (12), insbesondere koaxial zueinander,
- eine erste Abtriebswelle (21) und eine zweite Abtriebswelle (22), insbesondere koaxial zueinander,
- wenigstens eine Getriebestufe (30), die die erste Abtriebswelle (21) bzw. die zweite Abtriebswelle (22) mit der ersten Eingangswelle (11) und der zweiten Eingangswelle (12) verbindet,
- ein Gehäuse (50), in dem die ersten und zweiten Eingangs- und Ausgangswellen sowie die mindestens eine Getriebestufe (30) untergebracht sind,
Die mindestens eine Getriebestufe (30) weist mindestens eine erste Zwischenwelle (31) und eine zweite Zwischenwelle (32) auf, sodass eine Bewegungsübertragung von der ersten Eingangswelle (11) zur ersten Ausgangswelle (21) bzw. von der zweiten Eingangswelle (12) zur zweiten Ausgangswelle (22) unabhängig voneinander erfolgt,
**dadurch gekennzeichnet, dass** die erste Zwischenwelle (31) die zweite Zwischenwelle (32) durchdringt und dass die erste Zwischenwelle (31) an ersten und zweiten am Gehäuse (50) angeordneten Lagern (41, 42) gelagert ist,
Die zweite Zwischenwelle (32) ist auf der ersten Zwischenwelle (31) frei drehbar gelagert.

2. Untersetzungsgetriebe (1) nach dem vorhergehenden Anspruch, wobei die zweite Zwischenwelle (32) auf der ersten Zwischenwelle (31) durch Schwenklager (43, 44), insbesondere zwei Lager, beispielsweise Nadellager, gelagert ist.

3. Untersetzungsgetriebeanordnung (1) nach einem der vorhergehenden Ansprüche, wobei die zweite Zwischenwelle (32) axial an einer oder zwei Schultern (46) der ersten Zwischenwelle (31) anliegt.

4. Untersetzungsgetriebeanordnung (1) nach einem der vorhergehenden Ansprüche, wobei die zweite Zwischenwelle (32) axial an einer Schulter (47) des zweiten Lagers (42), insbesondere einem Innenring des zweiten Lagers, anliegt.

5. Untersetzungsgetriebeanordnung (1) nach einem der vorhergehenden Ansprüche mit einem Halteteil (48) für das zweite Lager (42) auf der ersten Zwischenwelle (31).

6. Untersetzungsgetriebeanordnung (1) nach einem der vorhergehenden Ansprüche, wobei das Gehäuse (50) zwei Teile aufweist, wobei ein erster Gehäuseteil (51) insbesondere die erste Eingangswelle, die erste Ausgangswelle und einen ersten Teil der mindestens einen Getriebestufe (30) aufnimmt, und ein zweiter Gehäuseteil (52) insbesondere die zweite Eingangswelle, die zweite Ausgangswelle und einen zweiten Teil der mindestens einen Getriebestufe (30) aufnimmt.

7. Untersetzungsgetriebeanordnung (1) nach einem der vorhergehenden Ansprüche, wobei die erste Zwischenwelle (31) einen durchgehenden Längskanal (33) oder mehrere durchgehende Längskanäle aufweist.

8. Getriebesystem (1) nach einem der vorhergehenden Ansprüche, wobei die erste Zwischenwelle (31) und die zweite Zwischenwelle (32) der wenigstens einen Getriebestufe jeweils Schraubverzahnungen (37, 38) aufweisen, die mit der ersten Abtriebswelle (21) bzw. mit der zweiten Abtriebswelle (22) oder mit einer anderen Getriebestufe, insbesondere mit den Zwischenwellen einer anderen Getriebestufe, zusammenwirken, wobei die Schraubverzahnungen (37, 38) jeweils Schraubverzahnungen in entgegengesetzter Richtung zueinander aufweisen.

9. Untersetzungsgetriebeanordnung (1) nach einem der vorhergehenden Ansprüche, wobei die zweite Eingangswelle (12) frei drehbar auf der ersten Eingangswelle (11) montiert ist.

10. Untersetzungsgetriebeanordnung (1) nach einem der vorhergehenden Ansprüche, wobei die erste Eingangswelle (11) einen durchgehenden Längskanal (15) aufweist.

11. Untersetzungsgetriebeanordnung (1) nach einem der vorhergehenden Ansprüche, wobei die zweite Abtriebswelle (22) frei drehbar auf der ersten Abtriebswelle (21) montiert ist.

12. Untersetzungsgetriebeanordnung (1) nach einem der vorhergehenden Ansprüche, wobei die zweite Abtriebswelle (22) und/oder die erste Abtriebswelle (21) jeweils auf einem kombinierten Lager (25, 26) mit zwei Kugelreihen montiert sind.

13. 2Reduzieranordnung (1 2) nach dem vorhergehenden Anspruch, mit wenigstens einem Halteelement, insbesondere einer Halteplatte (28), des kombinierten Lagers auf dem Gehäuse.

14. Antriebsvorrichtung für ein Kraftfahrzeug mit einer Untersetzungseinheit (1) nach einem der vorhergehenden Ansprüche und zwei rotierenden elektrischen Maschinen.

15. Fahrzeug mit einer Reduzieranordnung (1) oder einer Vorrichtung nach einem der Ansprüche 1 bis 13 oder einer Antriebsvorrichtung nach dem vorhergehenden Anspruch.

## Claims

1. Reducer assembly (1) for a motor vehicle, comprising:
first entry shaft (11) and a second entry shaft (12), in particular coaxial with each other,
first output shaft (21) and a second output shaft (22), in particular coaxial with each other,
at least one transmission stage (30) respectively connecting the first output shaft (21) and the second output shaft (22) to the first entry shaft (11) and to the second entry shaft (12),
housing (50) in which are housed the first and second entry and exit shafts as well as the at least one transmission stage (30),
the at least one transmission stage (30) comprising at least a first intermediate shaft (31) and a second intermediate shaft (32) so that a movement transmission takes location respectively from the first entry shaft (11) towards the first output shaft (21) and from the second entry shaft (12) towards the second output shaft (22), independently of each other,
**characterised in that** the first intermediate shaft (31) passes through the second intermediate shaft (32) and that the first intermediate shaft (31) is mounted on first and second bearings (41, 42) arranged on the casing (50),
the second intermediate shaft (32) being mounted freely in rotation on the first intermediate shaft (31).

2. Reducer assembly (1) according to previous claim 1, the second intermediate shaft (32) being mounted on the first intermediate shaft (31) by pivot bearings (43, 44), in particular two bearings, for example needle bearings.

3. Reducer assembly (1) according to any one of the previous claims, the second intermediate shaft (32) being mounted in axial abutment against one or two shoulders (46) of the first intermediate shaft (31).

4. Reducer assembly (1) according to any one of the previous claims, the second intermediate shaft (32) being mounted in axial abutment against a shoulder (47) of the second bearing (42), in particular an inner ring of the second bearing.

5. A reduction gear assembly (1) according to any one of the previous claims, comprising a component (48) for holding the second bearing (42) on the first intermediate shaft (31).

6. Reducer assembly (1) according to any one of the previous claims, the casing (50) comprising two parts, a first casing part (51) housing notably the first entry shaft, the first output shaft, as well as a first part of the at least one transmission stage (30), and a second casing part (52) housing notably the second entry shaft, the second output shaft, as well as a second part of the at least one transmission stage (30).

7. A reduction gear assembly (1) according to any one of the previous claims, the first intermediate shaft (31) comprising a longitudinal through-channel (33) or several longitudinal through-channels.

8. Reducer assembly (1) according to any one of the previous claims, the first intermediate shaft (31) and the second intermediate shaft (32) of the at least one transmission stage each comprising helical toothings (37, 38) cooperating respectively with the first output shaft (21) and with the second output shaft (22) or with another transmission stage, in particular the intermediate shafts of another transmission stage, said helical toothings (37, 38) having respectively opposite direction propellers by report to each other.

9. Reducer assembly (1) according to any one of the previous claims, the second entry shaft (12) being mounted to rotate freely on the first entry shaft (11).

10. Reducer assembly (1) according to any one of the previous claims, the first entry shaft (11) comprising a longitudinal through channel (15).

11. Reducer assembly (1) according to any one of the previous claims, the second output shaft (22) being mounted freely rotatably on the first output shaft (21).

12. Reducer assembly (1) according to any one of the previous claims, the second output shaft (22) and/or the first output shaft (21) each being mounted on a combined bearing (25, 26) with a double row of balls.

13. The reduction gear assembly 2 (1 2) according to previous claim 1, comprising at least one holding item, in particular a holding plate (28), for the combined bearing on the casing.

14. Motor vehicle propulsion device, comprising a reduction gear assembly (1) according to any one of the previous claims and two rotary electrical machines.

15. Vehicle comprising a reduction gear assembly (1) or a device according to any one of claims 1 to 13 or a propulsion device according to the previous claim.
